# EUROPEAN PATENT APPLICATION

(11) **EP 1 215 570 A1**
(43) Date of publication of application: **19.06.2002**
(21) Application number: 00127367.1
(22) Date of filing: 13.12.2000
(51) Int. Cl.: G06F 9/44

(54) **Providing a windows-based user interface**

(71) Applicant: Pentap Technologies AG, 39100 Bozen (IT)
(72) Inventor: Hermanns, Jannis Christian, I-39011 Lana/Bozen (IT)
(74) Representative: Dendorfer, Claus, Dr.

(57) **Abstract**

A method for providing a windows-based user interface displayable by an external browser (40), said user interface being adapted to provide a plurality of windows for executing application programs and for user interaction therewith, comprises the steps of creating an intermediary representation (34) of the elements of the user interface to be displayed and of their arrangement, using a rendering layer (36) to convert said intermediary representation (34) into markup language data (38) adapted to the capabilities of said external browser (40), and outputting said markup language data (38) to said external browser (40). A computer program product and a computer system comprise corresponding features.

## Description

The present invention concerns the field of providing a windows-based user interface at an external browser.

Windows-based user interfaces are well-known both in standalone computers and in computer networks. US patent 5,917,483 discloses a windows management system that permits a user to customize views from a plurality of frame windows into a single target window. EP 0 597 395 B1 shows an example in which the X Window System™ is used to present a user interface of the OS/2™ operating system at an external workstation running an X server. Application calls of the OS/2™ Presentation Manager™ are mapped into an X11 form which enables the application calls to be recognized by the X library of functional calls. The X library communicates with the X server via TCP/IP.

In view of this prior art, a need exists for making universal user interfaces available to a wider range of customers, and particularly to customers that do not use UNIX™-based systems like the X windows system.

In a separate thread of developments, the World Wide Web and the technologies used therein have become all-pervasive. These technologies include protocols like TCP/IP (Transmission Control Protocol/Internet Protocol), HTTP (Hypertext Transfer Protocol) and WAP (Wireless Application Protocol) as well as markup languages like XML (Extensible Markup Language), WML (Wireless Markup Language) and HTML (Hypertext Markup Language) with variants and extensions like CSS (Cascading Style Sheets). These technologies are employed in the Internet and in a large number of Intranets and other communication networks. Furthermore, sophisticated browsers for these protocols and markup languages are in common use not only in connection with personal computers, but also for mobile devices, settop boxes and other embedded systems.

It is known to provide some sort of user interface at an external or remote browser. Many Internet portals offer the possibility of customizing their appearance according to user preferences. Information that is specifically tailored to the user's interests may thus be presented. Other Internet sites, like the site presently available at the address http://www.beatles.com, comprise a user interface with several fixed regions for displaying information and for allowing user interaction. These Internet sites, however, do not permit the user to run application programs or to freely interact with running application programs.

In view of this prior art, a need exists to provide more possibilities for user control and user interaction in the context of World Wide Web technologies. In particular, a need exists for providing a sophisticated and powerful user interface at an external browser.

The present invention comprises a method having the features of claim 1, a computer program product having the features of claim 11 and a computer system having the features of claim 12. The dependent claims define preferred embodiments of the invention.

The invention is based on the idea of integrating the technical development lines mentioned above. In other words, the technologies of the World Wide Web are applied for providing a full-fledged user interface at an external browser. The present invention thus provides great improvements for remote execution of and interaction with all kinds of application programs. The advantages of the present invention are especially marked for remote maintaining services, home office and teleworking applications and generally for application service providing.

An important feature of the present invention is that an intermediary representation of the elements of the user interface is used. The rendering layer is employed to convert the intermediary representation into suitable markup language data, depending on the capabilities of the external browser. This technique of using an intermediary representation and a rendering layer separate from the windows manager proper is important for supporting a variety of different browsers and different browser configurations. This provides the technical foundation for the wide-spread use of the present invention in the World Wide Web and in other large and/or heterogeneous networks that are not restricted to one single browser in one single configuration.

Another important feature of the present invention is that markup language data is generated and output to the browser. In the terminology used herein, markup language data uses elements of a suitable markup language, i.e., a language that supports the transmission of additional information in a document. In many embodiments of the invention, the markup language will actually be a page description language, i.e., a language wherein emphasis is put on defining the layout to be achieved, and less emphasis is put on including other meta-information. The markup language or page description language preferably has a pure textual representation without any special control characters.

It is preferred that the rendering layer is adapted for converting the intermediary representation into two or more different markup languages. This feature makes it possible to use one and the same rendering layer for producing markup language data that is well-suited to the particularities of a plurality of different browsers. However, the inventive use of the intermediary representation and the rendering layer also has advantages for the development and maintenance of the system of the present invention even if different rendering layers, each of which being adapted only for a single markup language, are employed.

According to the present invention, an "external browser" is used. In most embodiments of the invention, this external browser will be a remote browser that is located in physical distance from the server where the method of the invention is performed. The scope of protection of the present invention, however, is intended to comprise also implementations where the inventive method and an additional browser process are executed by a single machine under control of a multitasking operating system. Such an additional browser process shall also be considered as an "external browser" (in spite of not being a "remote browser") in the terminology used in the present document.

By employing an external browser and a standardized markup language as the communication means from the present invention to the external browser, advantage can be taken of the huge development efforts that have been put into the creation of sophisticated browsers. The present invention thus requires comparatively little development effort and can nevertheless be used in connection with external browsers running on a wide variety of computers and other devices. A standard Internet browser is used as the external browser in preferred embodiments of the invention. However, the term "browser" shall not be limited to Internet browsers, but it shall generally comprise all programs that are adapted to receive and interpret the markup language data generated by the rendering layer. This includes, for example, browser programs that are installed on mobile devices like PDAs (Personal Digital Assistants) or mobile telephones, regardless of whether such browser programs are standalone programs or are integral parts of the operating system of the device.

The windows-based user interface of the present invention is adapted to provide a plurality of windows that can be used to execute application programs and to interact therewith. Typical application programs would be text editors, word processing programs, drawing programs, spreadsheet programs, personal information managers, communication programs, personal and workgroup organizers and so on. Auxiliary programs and tools like, for example, clocks, calendars, load indicators or chat clients are also considered as "application programs" in this sense. Furthermore, the user interface may or may not provide dedicated windows for particular functions like, for example, a system tray, a window for starting application programs, a menu palette and a directory tree viewer.

Preferred embodiments of the invention strive to provide the full functionality of common windows-based user interfaces like the user interfaces of the Microsoft™ Windows™ operating system or the Macintosh™ operating system. It is preferred to emulate a Web-based, windowed desktop where application windows can be freely arranged on the screen and can be used in the same way as with a usual standalone or networked workstation.

In preferred embodiments of the invention the user interface supports at least one, and preferably several or all of the operations of opening a new window (with or without starting execution of an associated application program), closing an existing window (with or without terminating operation of the application program), resizing a window, minimizing a window (reducing it to a title bar or to an icon that may be displayed either at the desktop workspace or in a dedicated system tray window), and moving a window (either in small increments or within the limitations of a rather coarse grid).

The present invention preferably uses World Wide Web technologies to provide the user interface to the external browser. As mentioned in the first paragraphs of the present document, such technologies comprise the protocols TCP/IP and HTTP, the markup languages XML, WML and HTML (with extensions and variants) and any other protocol or markup language that is commonly used in the World Wide Web. In further preferred embodiments, the markup language data may contain or reference active program elements. These may be elements of scripting languages like, for example, JavaScript™, or active program elements that are interpreted by widely-used plugins of the browser like, for example, Flash™ scripts adapted for execution by Macromedia™ Shockwave™ plugins. Precompiled programs like, for example, Java™ applets are also considered as active program elements in this sense.

Preferred embodiments of the present invention use a markup language based on HTML. This includes "pure" HTML as the markup language and any variant or extension of HTML, like, for example, HTML with CSS (Cascading Style Sheets). In these embodiments, the basic structure of the generated markup language data is preferably based on HTML tables and/or HTML frames. Each window may be represented by one or more fields of an HTML table or by one or more frames of an HTML frameset.

For implementing the functionality of a windows-based user interface, user interaction zones are preferably defined in the markup language data and are displayed by the browser. When the user performs a predefined action with respect to one of the user interaction zones (for example, clicking onto the zone or moving the mouse over the zone or moving the mouse while the mouse key is depressed), the browser preferably issues a page request (for example, an HTTP GET command) that specifies the user interaction zone concerned and/or the kind of user action. In response to receiving such a page request, the intermediary representation of the user interface will preferably be updated, and new markup language data will be output to the browser and displayed.

Preferred embodiments of the present invention comprise a profile database in which a plurality of user profiles are stored. Each user profile preferably defines a particular set of elements of the user interface and/or a particular arrangement of these elements to be displayed. When a user logs into the system, the appropriate user interface profile is accessed and the user interface is displayed according to the settings and preferences stored in the user interface profile.

In embodiments that employ user interface profiles, it is further preferred to record any changes made by the user to the configuration of his or her user interface in the profile database. This storing operation can take place concurrently with the ongoing user session, or the changes can be recorded temporarily and committed to the profile database when the user logs out. In these embodiments, the user will be presented with the most recent configuration of his or her personal user interface whenever he or she logs into the system.

It is preferred that the processing steps of creating the intermediary representation of the user interface, converting this representation into the markup language data and outputting the markup language data are performed by a server that is connected to the external client via a data communication network.

The computer program product and the computer system of the present invention preferably also comprise one, several or all of the features that have been described above and/or have been mentioned in the dependent method claims. It should be noted that the computer system of the present invention may either comprise the server and the client or the server only. Likewise, the computer program product may be a program that is only executed by the server, or it may be a set of programs that are intended for the server and the client, respectively.

Further features, objects and advantages of the present invention will be apparent from the following detailed description of sample embodiments. Reference is made to the drawings, in which:
Fig. 1 shows a schematic block diagram of a networked computer system implementing a sample embodiment of the present invention,
Fig. 2 shows a more detailed representation of the block diagram of Fig. 1 and the data communicated between the individual components,
Fig. 3 is an example of the user interface displayed by the browser in the system of Fig. 1, and
Fig. 4 shows a flow diagram of a user session in the system of Fig. 1.

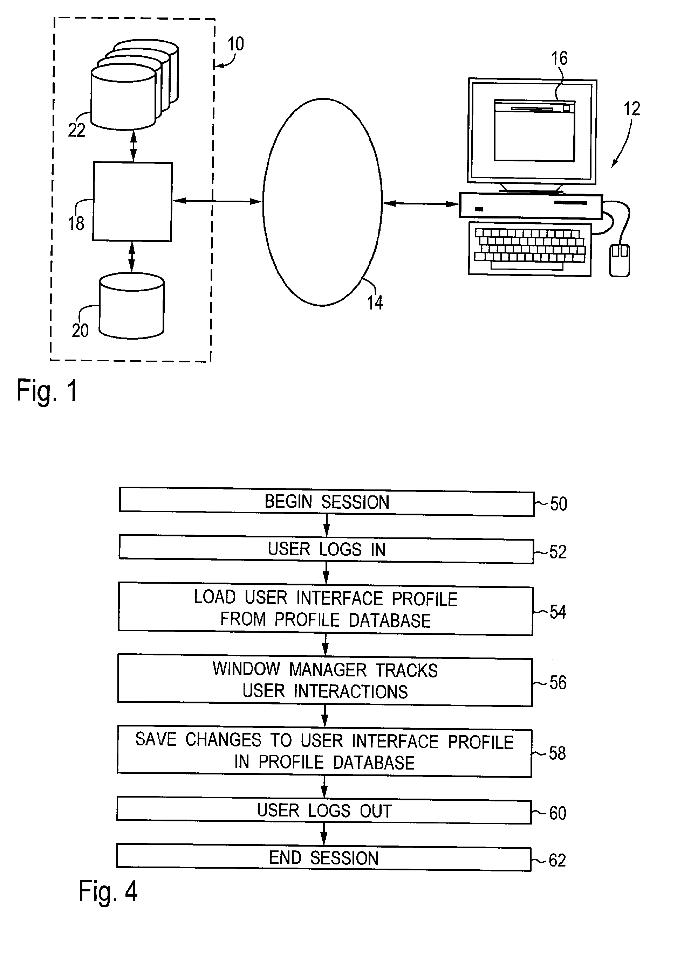

The computer system shown in the sample embodiment of Fig. 1 comprises a server 10 communicating with a client 12 via a data communication network 14. The server 10 is a powerful computer or a computer cluster or a computer network. The client 12 is depicted in Fig. 1 as a personal computer running an Internet browser like, for example, one of the browsers Microsoft™ Internet Explorer™ or Netscape™ Navigator™. A browser window 16 is displayed on a display unit of the client 12. Generally, the client 12 does not have to be a personal computer, but it could be any device communicating with the data communication network 14 like, for example, a cellular telephone or a PDA (Personal Digital Assistant) or a NC (Network Computer). In embodiments where one of these devices is used, the browser 40 may be integrated with the operating system, or it may be an application program executed by the device. Since the resources of mobile devices are typically limited, the browser 40 may be a special, lean program and does not have to be a full-fledged Internet browser.

The data communication network 14 is the Internet in the present sample embodiment, but it may also be an Intranet or another wide area network in other embodiments.

A single processing unit 18 is shown as part of the server 10 in Fig. 1, but it is apparent that a plurality of further processing units could be present in alternative embodiments. The server 10 comprises a profile database 20 for storing user interface profiles. The profile database 20 is implemented by one of the generally available database management systems like, for example, the MySQL™ system. The server 10 comprises or at least accesses further file systems containing, for example, the server operating system, the program and library files implementing the present invention, the program and library files of the available application programs and file space for the individual users. These further file systems are summarily indicated by reference numeral 22 in Fig. 1.

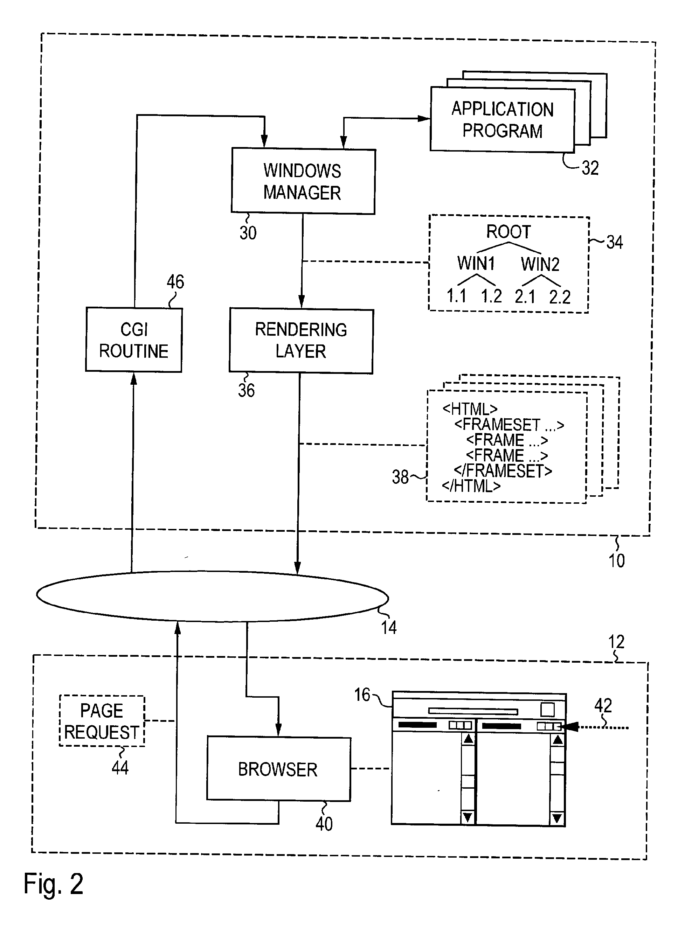

Fig. 2 represents some of the program modules executed by the server 10 and the client 12 in more detail, as far as it is necessary for describing the operation of the present sample embodiment. A windows manager 30 connects the user interface with a plurality of application programs 32. The application programs 32 run on either the server 10 or on other computers that are networked with the server 10. The windows manager 30 maintains an intermediary representation 34 of all elements of the user interface. The intermediary representation 34 is stored in a tree-like format. Information about the individual windows of the user interface is stored at the first branching level of the tree, information about major features of each window is stored at the second branching level beneath the corresponding window information, and so on. Other formats for representing the user interface desktop in an abstract way are used in alternative embodiments.

Whenever one of the application programs 32 performs an output function, an appropriate procedure of the windows manager 30 is called and modifies the intermediary representation 34 accordingly. A rendering layer 36 performs the actual output operations. The rendering layer 36 traverses the tree-like intermediary representation 34 and converts it into suitable markup language data 38. This conversion process will be described in more detail below.

The markup language data 38 generated by the rendering layer 36 is transmitted via the data communication network 14 using the TCP/IP and HTTP protocols. The browser that has already been mentioned in connection with Fig. 1 is denoted by reference numeral 40 in Fig. 2. The browser 40 processes the received page description language data 38 and generates the corresponding graphical representation in the browser window 16.

The representation of the browser window 16 in Fig. 2 very schematically shows the typical elements of a window-based user interface. Two windows are displayed side-by-side, and the usual control elements are associated with each window. In the present sample embodiment, these control elements are a vertical scroll bar at the right hand side of each window and a title bar at the top of each window. The title bar shows a window name and contains three control fields for minimizing/maximizing the window, putting it in the system tray and closing it, respectively. In pure HTML implementations, further control fields for splitting a window into two parts (vertically or horizontally) are provided. The main part of each window comprises the actual contents to be displayed to the user like, for example, text currently being edited in a word processing application or a graphical representation of a project schedule created by a planning application.

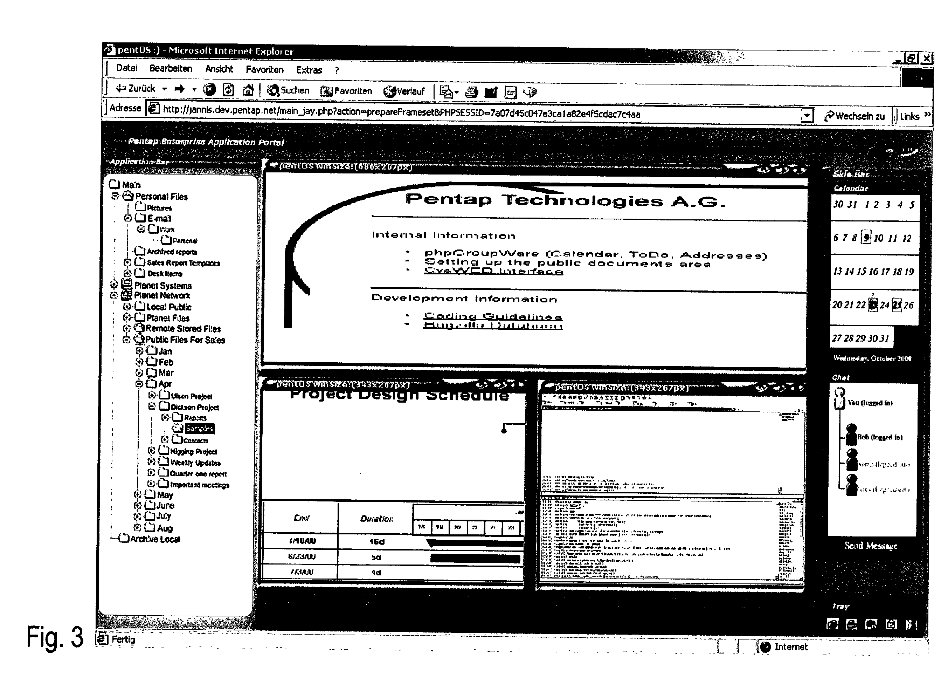

Fig. 3 shows a more detailed representation of the contents of the browser window 16 in an actual application example. Three application windows are depicted in the center of the browser window 16. An application bar is located at the left hand side of the browser window 16, and a side bar is located at its right hand side. The application bar shows a view of the directory tree of the user file system. The side bar contains windows of small tools and auxiliary programs like, in the present example, a calendar tool and a chat client. A system tray, which holds shortcut icons and icons of minimized windows, is shown in the bottom right corner of the browser window 16. Many alternative layouts, designs and styles are possible in other embodiments of the present invention.

The user interface displayed in the browser window 16 contains a plurality of user interaction zones. User interactions zones are regions of the browser window 16 that provide some reaction to user actions like, for example mouse clicks. All control fields mentioned above are user interaction zones, and main part of a window often also forms one or many user interaction zones such that the typical functionality of window-based user interfaces can be provided. Returning to Fig. 2, a user action 42 is schematically depicted there. The user action 42 is a mouse click onto the close box of the title bar, meaning that the user desires to close the corresponding window.

In response to the user action 42, the browser 40 issues a page request 44. The page request is a HTTP GET command that contains information about the current user session and in particular information about the type of the user action 40 (a mouse click in the present example) and about the user interaction zone concerned. The information about the user interaction zone may comprise the current cursor coordinates relative to the browser window 16 or relative to the currently selected user interface window. Alternatively, the user interaction zone and possible sub-zones (e.g., top arrow of scroll bar, region between top arrow and position indicator, position indicator, region between position indicator and bottom arrow, bottom arrow) may be identified in the page request 44.

The page request 44 is transmitted back to the server 10 via the data communication network 14. A CGI routine 46 is used to extract the information relevant with respect to the user interface from the page request 44. This information is forwarded to the windows manager 30 in the form of a window event like, for example, close, resize, move and so on. The windows manager 30 in turn informs the relevant application program 32 of the user input and modifies the intermediary representation 34 to provide the appropriate feedback to the user. A new cycle of rendering the intermediary representation 34, outputting corresponding markup language data 38 and displaying the updated user interface representation in the browser window 16 follows.

Further implementation details of the present sample embodiment will now be described. The rendering layer 36 is an important element of the present invention since its properties determine both the quality of the provided user interface and the versatility of the overall system. In order to provide the user interface at a wide variety of devices used as clients 12, the rendering layer 36 is adapted to generate the markup language data 38 in a plurality of different markup languages like, for example, HTML, WML (for a WAP-enabled mobile phone) or XML (for next generation browsers that include sophisticated renderers). The choice of the markup language used depends on the type and capabilities of the browser 40 running at the client 12. Furthermore, the rendering layer 36 is adapted to generate a plurality of different styles even for one particular markup language. For example, the rendering layer 36 may generate either an HTML page with a reference to a FLASH™ script (if a FLASH™ plugin is installed at the browser 40), or an HTML page with CSS extensions (if supported by the browser 40), or otherwise a plain HTML page.

The rendering layer 36 strives to take advantage of all these possibilities to make the resulting user interface look as good as possible within the limitations set by the browser 40 and the client 12. Assume, for example, that pure HTML is used as the page description language in a particular system configuration. Pure HTML provides considerable possibilities for structured document rendering that can be used in defining the basic layout of the information to be displayed. However, some limitations must be accepted. Pure HTML, for example, does not allow freely movable windows.

In the present sample embodiment, the rendering layer 36 uses frames in one or more static framesets to render windows for pure HTML output. Depending on the number and arrangement of the windows to be displayed, the HTML data (corresponding to the markup language data 38) contains one large frameset and, if necessary, a plurality of sub-framesets. In each frameset, each window is rendered as a frame. For example, the user interface shown in the browser window 16 of Fig. 2 (a desktop split into two windows arranged side-by-side) would be produced by markup language data 38 having the structure that is also shown in Fig. 2 (one frameset with two frames). To render the three main application windows shown in Fig. 3, markup language data 38 with the following basic structure would be generated by the rendering layer 36:
- frameset 1
   - frame 1
- frameset 2
   - frame 2
   - frame 3

Within each frame, the rendering layer 36 produces HTML data defining the graphical elements, control elements, and contents of the window. The style or graphic appearance of the windows can be defined by the user and/or the system administrator. The contents of a window may be defined using HTML constructs, or they may just be given by a picture embedded in or referenced by the HTML data. Control elements like those for closing or splitting a window are included in the HTML data in the form of user interaction widgets, which define the user interaction zones mentioned above.

The HTML data contains other elements for providing a high quality user interface. For example, client-side JavaScript™ code is embedded in the HTML data to change the mouse cursor to a larger arrow when the user points on a window border. Clicking on the border sends a corresponding page request 44 to the server 10. As described above, this page request 44 contains an argument indicating that the user would like to resize the window. The windows manager 30 calculates the modified desktop (wherein the window has been enlarged or shrunk by a predefined increment at the selected border), and new HTML data is generated by the rendering layer 36.

The above concrete example concerned a HTML browser 40 with enabled frame capability. For low-end browsers that cannot display frames, HTML tables could be used instead. If the browser 40 is part of a mobile WAP device, the rendering layer 36 could in some embodiments split up the desktop and render only one single window per WML deck.

On the other hand, when rendering to a high-end page description language format that fully supports windowing, the rendering layer 36 does not need to resort to the above auxiliary constructions, but may instead take full advantage of the browser's capabilities. It is yet a further alternative to create a platform that supports windowing by using layers and additional active program elements like, for example, JavaScript™. After checking the capabilities of the browser 40, the rendering layer 36 may send the JavaScript™ code that is required for the additional windowing functionality and then output markup language data 38 that is specifically adapted for this newly created platform.

The present sample embodiment supports an unlimited set of desktops that may contain an unlimited set of windows each. Each user may configure and modify the appearance (user interface elements and arrangement thereof) of his or her desktop. The current settings (more accurately, the corresponding intermediary representation 34) are stored in the profile database 20. The settings are loaded whenever a user logs into the system.

Fig. 4 shows some steps of a sample user session in more detail. The session begins in step 50 with the server 10 creating a unique session identifier. This identifier will be used in all communication steps with the client 12. Techniques for creating a user session in the context of request/reply protocols like the HTTP protocol are well-known and are not, by themselves, the subject of the present invention. In step 52, the user logs into the system, giving his or her user name and password. The corresponding user interface profile is loaded from the profile database 20 in step 54. The user interface profile contains, among other information, the intermediary representation 34 of the user's personal startup desktop configuration. The corresponding user interface comprising the user's personal settings will then be presented in the browser window 16.

While the user works with the user interface as described above, the window manager 30 tracks all user interaction steps that alter the appearance of the user interface (step 58). For example, such user interaction steps would be all operations of splitting or moving or resizing windows. In step 58, the changes made by the user to the user interface configuration are recorded in the profile database 20. This recording may be initiated automatically after each user interaction or automatically after a predetermined number of user interactions or manually in response to an explicit user command. While automatic saving may be more convenient for inexperienced users, the manual saving option gives users a choice of either committing or discarding any changes made to the stored user interface configuration.

The user sessions ends with the user logging out in step 60. The session identifier is then declared invalid in step 62. The stored user interface layout will be retrieved when the user logs into the system again.

## Claims

1. A method for providing a windows-based user interface displayable by an external browser (40), said user interface being adapted to provide a plurality of windows for executing application programs and for user interaction therewith, said method comprising the steps of:
- creating an intermediary representation (34) of the elements of the user interface to be displayed and of their arrangement,
- using a rendering layer (36) to convert said intermediary representation (34) into markup language data (38) adapted to the capabilities of said external browser (40), and
- outputting said markup language data (38) to said external browser (40).

2. The method of claim 1,
wherein said rendering layer (36) is adapted for generating said markup language data (38) in a plurality of different markup languages.

3. The method of claim 1 or claim 2,
wherein said windows-based user interface supports at least one of the following operations:
- opening a new window,
- closing an existing window,
- resizing a window, and
- moving a window.

4. The method of one of claims 1 to 3,
wherein said user interface is provided to said external browser (40) using World Wide Web technologies.

5. The method if one of claims 1 to 4,
wherein said markup language is based on HTML, and wherein the structure of the output markup language data (38) is based on HTML tables and/or HTML frames.

6. The method of one of claims 1 to 5,
wherein said markup language data (38) contains or references at least one active program element.

7. The method of one of claims 1 to 6,
wherein said markup language data (38) defines a plurality of user interaction zones, and wherein said markup language data (38) comprises elements that cause said external browser (40), when a predefined user action (42) is performed in connection with one of said plurality of user interaction zones, to issue a page request (44) containing information about said one of said plurality of user interaction zones.

8. The method of claim 7,
comprising the further steps of:
- receiving said page request (44) from said external browser,
- determining said information contained in said page request (44),
- creating, dependent on said information, an updated intermediary representation (34) of the elements of the user interface to be displayed and of their arrangement,
- using said rendering layer (36) to convert said updated intermediary representation (34) into new markup language data (38) adapted to the capabilities of said external browser (40), and
- outputting said new markup language data (38) to said external browser (40) as a reply to said page request (44).

9. The method of one of claims 1 to 8,
wherein a plurality of different user interface profiles are stored in a profile database (20) and are associated with a plurality of different users, each user interface profile defining a particular set of elements and/or a particular arrangement of these elements, and wherein, when a user logs in, the corresponding user interface profile is accessed in said profile database (20) and is used for creating said intermediary representation (34) of the elements of the user interface to be displayed and of their arrangement.

10. The method of claim 9,
wherein any change to the elements of the user interface and/or to their arrangement is stored in the user interface profile of the present user in said profile database (20).

11. A computer program product for execution by at least one server (10) for for providing a windows-based user interface displayable by an external browser (40), said user interface being adapted to provide a plurality of windows for executing application programs and for user interaction therewith, said computer program product including instructions for making said at least one server (10) perform the steps of the method of one of claims 1 to 10.

12. A computer system for providing a windows-based user interface displayable by an external browser (40), said user interface being adapted to provide a plurality of windows for executing application programs and for user interaction therewith, said computer system comprising at least one server (10) programmed for performing a method according to one of claims 1 to 10.

13. The computer system of claim 12,
further comprising said external browser (40) executed by a client (12), said external browser (40) communicating with said at least one server (10) via a data communication network (14), said external browser (40) processing the markup language data (38) received from said at least one server (10) and displaying said user interface.
